# EUROPEAN PATENT SPECIFICATION

(11) **EP 1 926 977 B1**
(45) Date of publication and mention of the grant of the patent: **19.01.2011**
(21) Application number: 05787638.5
(22) Date of filing: 22.09.2005
(51) Int. Cl.: G01J 3/02

(54) **SPECTROMETER MOUNT AND MEASURING APPARATUS INCLUDING SAME**
SPEKTROMETERANBRINGUNG UND MESSVORRICHTUNG DAMIT
SUPPORT DE SPECTROMÈTRE ET APPAREIL DE MESURE INCLUANT CELUI-CI

(43) Date of publication of application: 04.06.2008
(73) Proprietor: HAMAMATSU PHOTONICS KABUSHIKI KAISHA, Hamamatsu City Shizuoka 435-8558 (JP)
(72) Inventor: HILLER, Dietmar, 8048 Zurich (CH); TEICHMANN, Helmut, 8048 Zurich (CH); STARKER, Ulrich, 8048 Zurich (CH)
(74) Representative: Frost, Alex John
(86) International application number: PCT/JP2005/018055
(87) International publication number: WO 2007/034569

(56) References cited:
- DE-A1- 10 010 514
- GB-A- 2 288 461
- US-A- 3 591 288
- US-A1- 2004 004 718

## Description

### Technical Field

This invention relates to a spectrometer for separating incident light and a measuring apparatus using the spectrometer.

### Background Art

A spectrometer is an optical device for separating light to be measured into its spectral components with a dispersive element such as a prism or a diffraction grating. By detecting the spectral component of light separated by the dispersive element, the wavelength distribution of the light or the intensity of a specific wavelength component of the light can be known. Thus, spectrometers are used in a variety of application areas (for example, See Patent Document 1: Japanese Patent Application Laid-Open No. 2000-65642).
US-A-2004/004718 describes an apparatus for holding a generally flat colour sample in proximity with the optics of a portable colour instrument. The apparatus includes a platform upon which the portable colour instrument is secured, a colorimeter support plate with a sample stage which has multiple index planes upon which a colour sample is placed and a pressure foot (36) which holds the sample in position on the stage. The colour instrument is provided with an optics port in the optics shoe (which is attached to the bottom surface of the colour instrument) through which light travels. The colour instrument is held in place by first and second holding arms and the acceptance of the optics shoe into an aperture in the support plate.
US-A-5,159,404 describes a diode array spectrometer comprising a transparent carrier body defining a biconvex lens with 2 convex surfaces, a concave grating mounted on the first convex surface, a diode array lying opposite the second convex surface, and moulting means for holding the diode array so as to cause the second convex surface and the diode array to define a small space between them.

### Disclosure of the Invention

Small-sized spectrometers are generally applied to various spectroscopic measuring apparatuses and measuring systems. Such measuring apparatuses are constituted for example with: a light source for providing light, a light guide optical system, a spectrometer, and a measuring circuit.

When a spectrometer is applied to measuring apparatuses, optical fibers are often used for optical connection for letting object light to be optically separated into the spectrometer because the optical fibers can be installed easily with high accuracy. The types of optical fibers to be used include a single optical fiber having a large core and a fiber bundle. Here, the optical fiber having a large core is relatively rigid. A bending radius of a typical large-core optical fiber of a core diameter of 600 µm and a clad diameter of 720 µm is about 20 cm, for example.

On the other hand, when a fiber bundle is used for optical connection to a spectrometer, the fiber bundle must be protected against bending to achieve favorable optical connection and to prevent bending loss leading to poor measuring accuracy. Therefore, it is a common practice to protect the fiber bundle with a rather rigid tube or the like. As described above, since a certain extent of space is required to lay the optical fiber when a constitution is employed in which the fiber bundle or optical fiber having a large core is used for the optical connection to the spectrometer, a problem arises that the measuring apparatus as a whole becomes large in size.

In contrast to the above, it is considered to constitute a measuring apparatus without using an optical fiber for the optical connection to the spectrometer. In that case, the object light to be optically separated is cast through a light entry section of a slit shape or the like into the spectrometer. In such a constitution, however, since the spectrometer must be placed with high accuracy using an active alignment method relative to other components in the measuring apparatus, a problem arises that much time is required for positioning the apparatus. There are also problems about long term stability of the apparatus constitution, manufacturing cost, or the like.

This invention has been made to solve the above problems and therefore, an object of this invention is to provide a spectrometer capable of achieving favorable optical connection for the object light and a measuring apparatus using the spectrometer.

To accomplish the above object, a spectrometer of this invention is defined in claim 1.

The above spectrometer is constituted that the connecting member and the positioning element used for connecting the spectrometer to another member arc provided in a predetermined positional relationship to the glass member which permits the light, the object of optical analysis, to enter the interior or the spectroscopic section under predetermined incident conditions. This makes it possible, when the spectrometer is applied to the measuring apparatus, to interconnect the spectrometer and other component elements of the measuring, apparatus with high accuracy to favorably achieve the optical connection of the object light to be optically separated to the spectrometer. The above constitution, in particular when applied to the measuring apparatus, makes it possible to carry out positioning by passive alignment method and makes it easy to assemble the measuring apparatus including the spectrometer.

The measuring apparatus of this invention comprise: (1) the spectrometer as described above, (2) an optical system for guiding the object light to the light entry section of the spectrometer, and (3) a holding member connected to the connecting member of the spectrometer for holding the spectrometer and the optical system as positioned.

The arrangement described above, using the spectrometer having the connecting member and the positioning element, makes it possible to provide a measuring apparatus capable of accurately positioning the spectrometer relative to other component elements of the apparatus through a passive alignment method. Using the positioning element for positioning the spectrometer facilitates the manufacture of the measuring apparatus.

With the spectrometer and the measuring apparatus according to this invention, the constitution in which the connecting member and the positioning element for connecting the spectrometer to another member are provided in a predetermined positional relationship to the light entry section which permits the object light enter the interior of the spectroscopic section, makes it possible to interconnect and position the spectrometer and other component elements of the measuring apparatus with simplicity and high accuracy.

### Brief Description of the Drawings

FIG. 1 is an exploded perspective view showing the constitution of a spectrometer as the first embodiment.

FIG 2 shows the constitution of the spectrometer in a side view (a), a side view (b), and a plan view (c), as seen from the positive side of the x-axis, y-axis, and z-axis, respectively.

FIG. 3 is a perspective view roughly showing the constitution of a measuring apparatus as an embodiment.

FIG. 4 is an exploded perspective view showing the constitution of a spectrometer as the second embodiment.

FIG. 5 is an exploded perspective view showing the constitution of a spectrometer as the third embodiment.

### Best Modes for Carrying Out the Invention

Details of the spectrometer according to this invention and the measuring apparatus using the spectrometer are described in reference to preferable embodiments and the appended drawings. In the description of the drawings, the same elements are denoted with the same reference symbols and redundant description is omitted. It is also noted that the dimensional ratios in the drawings do not always the same as those in the description.

First, a constitution of the spectrometer according to this invention is described.

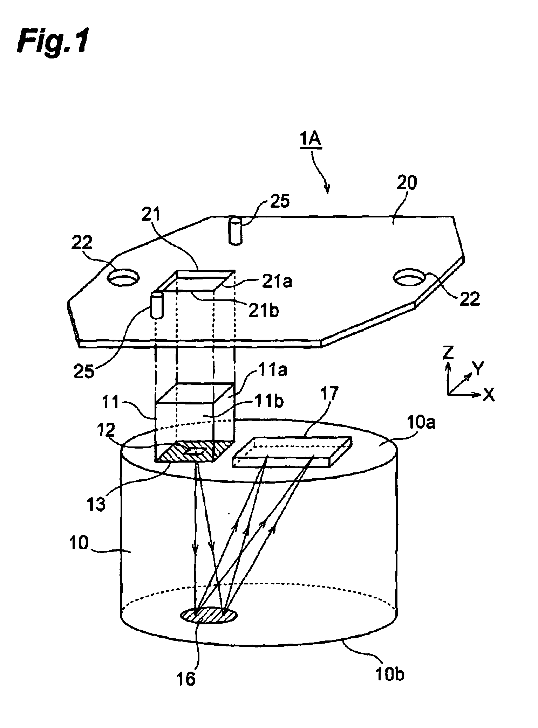

FIG 1 is an exploded perspective view showing the constitution of the spectrometer according to a first embodiment of this invention. Here, for the convenience of description, x-axis, y-axis, and z-axis extending at right angles to each other are defined as shown in FIG 1. Besides, when required for description, the negative and positive directions of the x-axis are assumed to be left and right directions, respectively, those of the y-axis to be forward and backward directions, and those of the z-axis to be downward and upward directions.

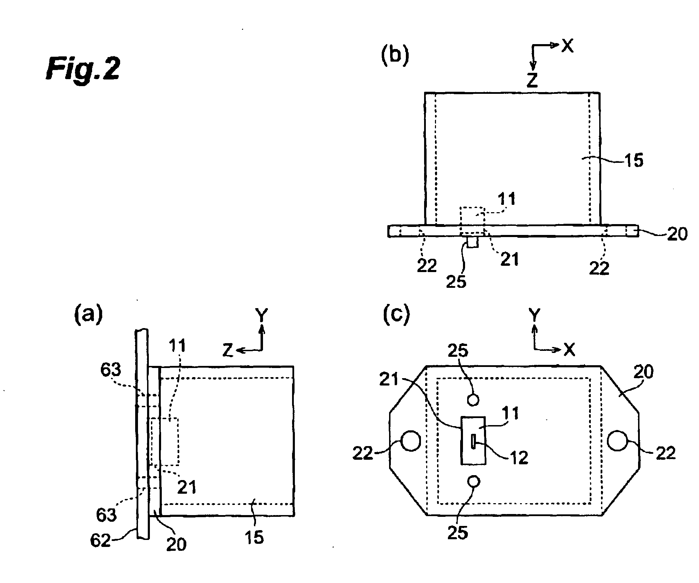

FIG. 2 shows the constitution of the spectrometer shown in FIG. 1, in which (a) is a side view as seen from the positive side of the x-axis, (b) is a side view as seen from the positive side of the y-axis, and (c) is a plan view as seen from the positive side of the z-axis.

A spectrometer 1A of this embodiment is provided with: an optical body 10, a glass member 11, and a connecting flange 20, in a constitution capable of achieving simple, accurate alignment of the spectrometer 1A when the spectrometer is applied to a measuring apparatus, as described later. The incident direction of light for this spectrometer 1A is in the negative direction of the z-axis in FIG 1.

The optical body 10 is made of a transparent material such as glass or a transparent resin material that permits passage of the object light for optical analysis by means of the spectrometer 1A, in a cylindrical shape centered on the z-axis. In this embodiment, a spectroscopic section used for separating the incident object light into its spectral components is constituted with: the optical body 10, a light entry slit 12 and a photodetector 17 both provided on the top surface 10a of the optical body 10, and a diffraction grating 16 provided on the underside 10b of the optical body 10.

FIG. 1 shows a diffraction grating 16 of a concave surface reflection type serving as the dispersive element for separating the object light into its spectral components and formed on the underside 10b, with the x-axis direction assumed to be the light dispersion direction. Such a diffraction grating 16 can be made for example by forming on the underside 10b a diffraction grating pattern such as a blazed grating at the time of forming the optical body 10, followed by applying a reflective coating such as of aluminum onto the area where the pattern is formed.

What is used as the photodetector 17 is for example a photodiode array (photodetection element array) made up of plural photodiodes (photodetection elements) arranged in a row in the direction of the x-axis which is the same as the direction of light dispersion with the diffraction grating 16. With the above constitution, the light coming in through the light entry slit 12 into the optical body 10 is reflected and also separated with the diffraction grating 16 as the dispersive element. Resultant spectral components are detected with the photodiode array 17 to carry out spectrometric measurements of the object light. The spectroscopic section may be in any constitution, without being limited to the specific example shown in FIG. 1.

In addition to the photodiode array 17, a glass member (glass spacer) 11 is placed on the top surface 10a of the optical body 10. The glass member 11 is a light entry member whose predetermined surface is formed with the light entry slit 12 serving as a light entry section that permits the entry of an object light under predetermined incident conditions (incident range, incident angle, etc. of light) into the spectroscopic section including the optical body 10. Specifically, the glass member 11 can be made of a material that permits passage of light of a predetermined wavelength range, in the shape of a mainly rectangular parallelepiped of a predetermined thickness. The underside of the glass member 11 in contact with the optical body 10 is formed by photolithography with a light entry window pattern 13 including the rectangular light entry slit 12.

The light entry slit 12 provided on the glass member 11 is to determine the path of the object light incident into the optical body 10. The glass member 11 and the photodiode array 17 are placed in position on the top surface 10a with required positional accuracy relative to the optical body 10 provided with the diffraction grating 16. The positioning or the glass member 11 and the photodiode array 17 is carried out in either passive alignment method or active alignment method depending on dispersion accuracy and performance specifically required of the spectrometer 1A and on tolerances allowed.

A connecting flange 20 of a plate-like shape is attached to the top surface 10a of the optical body 10 relative to the optical body 10 and the glass member 11. The connecting flange 20 is a connecting member used for connecting the light entry section made of the light entry slit 12 and the spectroscopic section including the optical body 10 to a predetermined other member. The other member (the member additional to the spectrometer) for connecting the spectrometer 1A is for example, as will be described later, other component member of the measuring apparatus to which the spectrometer 1A is intended for application.

The connecting flange 20 is provided with an opening 21. The opening 21 is provided in a position corresponding to the glass member 11 in the same rectangular shape as the glass member 11 as seen in the z-axis direction. Two side surfaces 11a and 11b of the glass member 11 and corresponding two side surfaces 21a and 21b of the opening 21 serve as positioning surfaces (reference surfaces) for mutual positioning of the glass member 11 and the connecting flange 20 with high accuracy as the surfaces come into contact with each other. In this way, the glass member 11 serving as the light entry member is inserted into the opening 21 and positioned relative to the connecting flange 20. The opening 21 serves as the positioning section (first positioning section) used for positioning relative to the light entry section. The light entry slit 12 is formed in the glass member 11, as positioned relative to the positioning surfaces 11a and 11b.

The top surface of the connecting flange 20 is provided with two positioning rods 25, one in front of and the other behind the opening 21. These positioning rods 25 are of a cylindrical shape projecting upward from the connecting flange 20 and placed with high accuracy in position relative to the positioning surfaces 21a and 21b, serving as the first positioning sections, of the opening 21. Here, the positioning rods 25 are positioned through the opening 21 relative to the glass member 11 including the light entry slit 12. In this manner, when the light entry section made of the light entry slit 12 and the spectroscopic section including the optical body 10 are connected to the other member, the positioning rods 25 serve as the positioning elements (second positioning sections, positioning protrusions) used for positioning the light entry section relative to the other member.

As shown in FIG. 2 with views (a) to (c), the optical body 10 and the glass member 11 is placed in a container 15 surrounding those. A housing of the spectrometer 1A for housing the optical body 10 and the glass member 11 is made up of the container 15 and the connecting flange 20. The connecting flange 20 is provided with securing holes 22 in specified positions, one each on left and right, for use when the other member is connected by means of screws. Illustration of the constitution inside the housing except for the glass member 11 is omitted in FIG. 2.

Effects of the spectrometer of the above embodiment are described below.

In the spectrometer 1A shown in FIGs. 1 and 2, the light entry slit 12 provided on the glass member 11 serving as the light entry section is used for letting light to be optically separated into the spectroscopic section made up of the optical body 10, the diffraction grating 16, and the photodiode array 17. Here, a constitution is employed in which the connecting flange 20 serving as the connecting member of a plate-like shape used when the spectrometer 1A is connected to the other member and the positioning rods 25 serving as the positioning elements are provided in a predetermined positional relationship to the light entry slit 12. With the above constitution, the spectrometer 1A and the other member of the measuring apparatus are interconnected with high accuracy when the spectrometer 1A is applied to the measuring apparatus, so that optical connection of the object light to the spectrometer 1A is achieved in a preferable manner.

In particular as described above, it is possible to use a passive alignment method to position the spectrometer 1A when the spectrometer 1A is applied to the measuring apparatus by using the positioning rods 25 for positioning the light entry slit 12 provided on the glass member 11 and the other component element present on the measuring apparatus side. Therefore, it is possible to achieve the connection of the spectrometer to the other member and assembly of the measuring apparatus including the spectrometer at a low cost, within a short period of time, and in a simple manner. Such a constitution is excellent also in terms of long-term stability of the device constitution. Here, the positioning element can have the form of a protrusion, recess, edge, angle and the like.

In the constitution shown in FIG. 1, as for the light entry section for permitting the entry of object light into the spectroscopic section, the glass member 11 serving as the light entry member formed with the light entry slit 12 is used. In this way, it is possible to carry out in a favorable manner placement of the light entry section relative to the spectroscopic section and connection and positioning when the spectrometer 1A is applied to the measuring apparatus. In the above constitution, the positioning surfaces 11 a and 11b are vertical to the top surface of the glass member 11 and the positioning surfaces 21a and 21b of the opening 21 are vertical to the underside of the connecting flange 20. The above constitution makes it possible to carry out positioning in the rotation around the z-axis as well as in the x-axis and y-axis directions.

As to the glass member 11, the connecting flange 20 is provided with the opening 21 serving as the first positioning section for positioning relative to the glass member 11 and the light entry slit 12, and with the positioning rods 25 serving as the second positioning sections, or the positioning elements, for positioning relative to another member. Using the connecting flange 20 as the connecting member makes it possible to carry out reliably the connection and positioning of the spectrometer 1A relative to the measuring apparatus.

Such a connecting flange 20 may be produced by precision machining of the opening 21 and the like using laser cutting technique. The positioning rods 25 may be arranged that the connecting flange 20 is provided with holes positioned relative to the opening 21 and precision rods are secured into the holes, so that they serve as the positioning rods 25. The whole connecting flange 20 may be formed as a single body by precision injection forming.

As for the positioning elements provided in predetermined positional relationship with the light entry section in the spectrometer, it is preferable to provide two or more of them to enable positioning with higher accuracy or in two dimensions. In the constitution example shown in FIG. 1, such a positioning is achieved by employing two positioning rods 25 relative to the glass member 11 and to the opening 21. In an alternative constitution, it is possible to use a single positioning element to be combined with another positioning section.

A measuring apparatus using the above spectrometer according to this invention is described below.

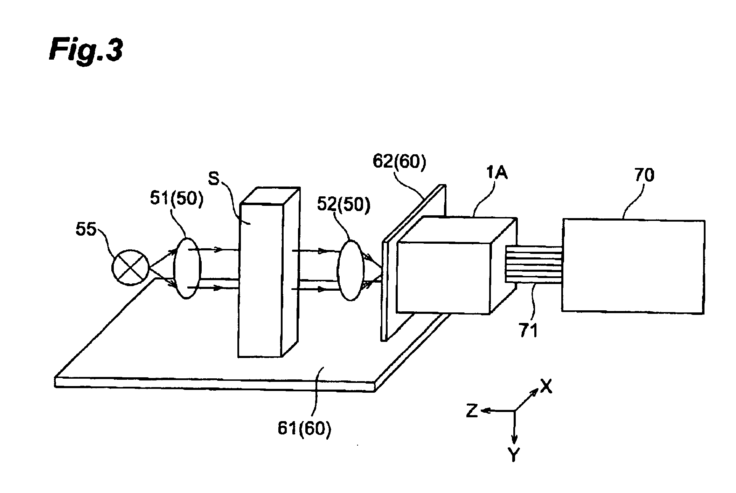

FIG. 3 is a perspective view roughly showing the constitution of a measuring apparatus as an embodiment of this invention. The measuring apparatus of this embodiment is made up of : the spectrometer 1A, a light source 55, an optical system 50, a holding member 60, and a measuring circuit 70. This measuring apparatus is a measuring system that performs analyses of characteristics and ingredients of a sample S as measuring light is supplied from the light source 55, is cast onto the sample S, passes through the sample S, and the light component passed through the sample S is measured with the spectrometer 1A. The specific constitution of the spectrometer 1A is the same as that described above in reference to FIGs. 1 and 2, and therefore it is omitted in FIG. 3. As for the placement of the sample S, a sample holder for holding the sample S is placed, as required, on a support table 61 which will be described later.

The optical system 50 is a light guide optical system for guiding light, to be separated with the spectrometer 1A, into the light entry section under predetermined light guide conditions. The optical system 50 of this embodiment has a lens 51 for collimating and casting light supplied from the light source 55 onto the sample S and a lens 52 for focusing the light passing through the sample S onto the spectrometer 1A. In other words, in the constitution shown in FIG. 3, the lens optical system 50 including the focusing lens 52 is used for optical connection for casting the light to be the object of separation onto the spectrometer 1 A.

The holding member 60 is provided to hold together the spectrometer 1A and the optical system 50 that constitute the measuring apparatus. The holding member 60 has the support table 61 for supporting the spectrometer 1A and the optical system 50, and a connecting plate 62 for connecting the spectrometer 1A. The connecting plate 62 is erected upright on the top surface of the support table 61. The light source 55 and the optical system 50 are held in place as positioned relative to the holding member 60 made up of the support table 61 and the connecting plate 62.

The connecting plate 62 is a second connecting member, the other member described above in relation to the spectrometer 1A, connected to the connecting flange 20 (See FIG. 1) of the spectrometer 1A. As shown in FIG 2(a), the connecting plate 62 is also provided with positioning holes 63 to which the positioning rods 25 of the spectrometer 1A are positioned and inserted.

When the spectrometer 1A of the above constitution is connected to the holding member 60, a simple and highly accurate positioning of the spectrometer 1A and the holding member 60 is achieved through a passive alignment method using the connecting flange (connecting member) 20 of the spectrometer 1A and the connecting plate (the second connecting member) 62 of the holding member 60. In this manner, the light source 55, the optical system 50, and the spectrometer 1A are held in the state of mutually positioned with the holding member 60 made up of the support table 61 and the connecting plate 62 with high accuracy.

To describe it more in detail, the spectrometer 1A is positioned in the z-axis direction relative to the light source 55 and to the optical system 50 by the contact between the top surface of the connecting flange 20 (See FIG 1) of the spectrometer 1A and the surface, on the side of the spectrometer 1A, of the connecting plate 62. Likewise, positioning of the spectrometer 1A is achieved in the x-axis and y-axis directions as the positioning rods 25 of the spectrometer 1A are inserted into the positioning holes 63 of the connecting plate 62.

The spectrometer 1A is also connected to a measuring circuit 70 through wirings 71. Thus, detection signals and the like outputted from the photodiode array 17 are sent to the measuring circuit 70 which carries out acquisition, processing, and analysis of data as required for spectrometric measurements.

As described above, using the spectrometer 1A having the connecting flange 20 serving as a connecting member and the positioning rods 25 serving as positioning elements makes it possible to achieve a measuring apparatus in which the spectrometer 1A is positioned with high accuracy relative to other component elements of the apparatus through a passive alignment method. Manufacture of the measuring apparatus is facilitated as the positioning elements are used for positioning the spectrometer 1A.

Here, as for setting the light guide conditions of the object light in the optical system 50, such as setting conditions of focusing of light to the spectrometer 1A through the lens 52, may be carried out for example in the constitution shown in FIGs. 2(a) and 3 using the surface, on the side of the spectrometer 1A, of the connecting plate 62 as a reference surface in consideration of characteristic parameters of the spectrometer 1A such as the numerical aperture NA (for example in the order of about 0.2), and the focus depth (apparent focal point). In this manner, an optical connection for letting the light to be optically separated enter through the light entry slit 12 into the spectrometer 1A is achieved under intended conditions.

As for the placement, combination and the like of component elements other than the spectrometer 1A in the measuring apparatus, they may be appropriately specified according to the type etc. of measurement carried out with the measuring apparatus. As for the constitution of the holding member for holding the spectrometer and the optical system in the state of being placed in position, it is not limited to the one shown in FIG 3 but may be one including the second connecting member connected as another member to the connecting member of the spectrometer. For example, the entire holding member as it is may also serve as the second connecting member.

The constitution of the spectrometer according to this invention is further described.

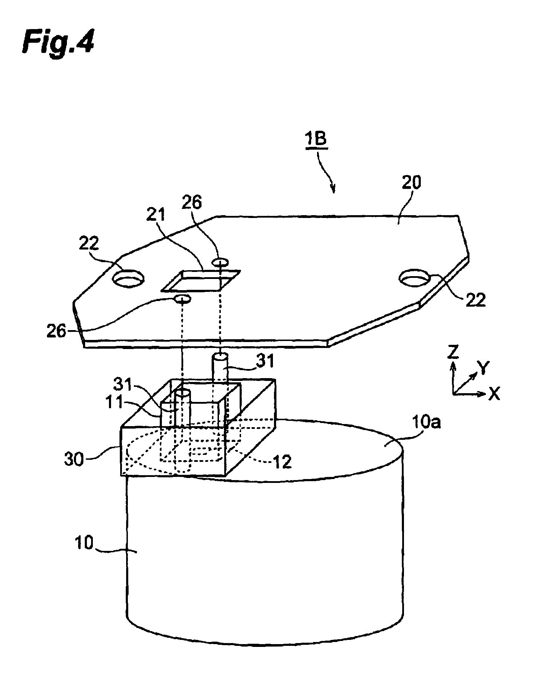

FIG. 4 is an exploded perspective view showing the constitution of a spectrometer as a second embodiment of this invention. The spectrometer 1B of this embodiment is made up of: the optical body 10, the glass member 11, and the connecting flange 20. The constitution of the optical body 10 and the glass member 11 of this embodiment is similar to that of the first embodiment. In FIG. 4, the diffraction grating 16 and the photodiode array 17 are omitted from illustration.

In relation to the optical body 10, the glass member 11, and others, the connecting flange 20 is attached to the top surface of a frame member 30. The connecting flange 20 is provided with the opening 21 to which the glass member 11 is positioned and inserted, and also with the holes 22 for securing the connecting flange 20 by means of screws.

In this embodiment, a frame member 30 is placed on the top surface 10a of the optical body 10 so as to surround the glass member 11. The frame member 30 is provided with two positioning rods 31, one in front of and the other behind the glass member 11. These positioning rods 31 are of a cylindrical shape projecting upward from the optical body 10 and placed in position relative to the glass member 11 and the light entry slit 12. The constitution of the frame member 30, except for the positioning rods 31, is shown in a simplified illustration in FIG 4.

For the above positioning rods 31, the connecting flange 20 is provided with two insertion holes 26, one in front of and the other behind the opening 21, in positions corresponding to the positioning rods 31, so that the positioning rods 31 are inserted into the insertion holes 26. In this manner, the positioning rods 31 project upward from the connecting flange 20 to be positioning members serving as the positioning elements placed in position relative to the glass member 11 including the light entry slit 12.

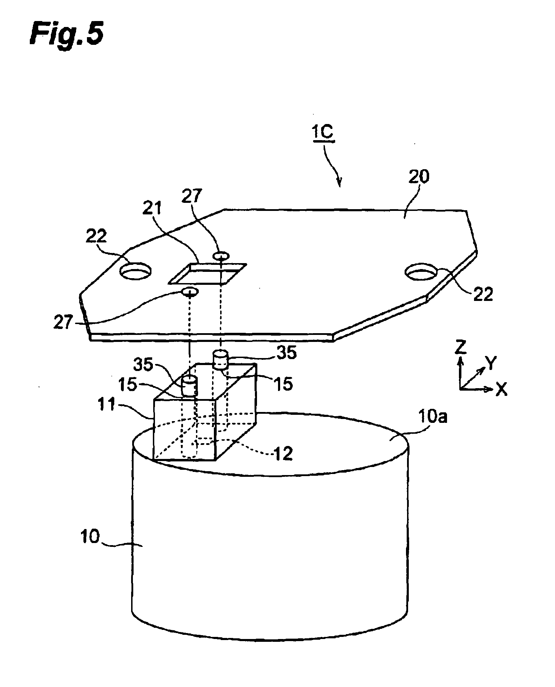

FIG. 5 is an exploded perspective view showing the constitution of a spectrometer as a third embodiment of this invention. The spectrometer 1C of this embodiment is made up of: the optical body 10, the glass member 11, and the connecting flange 20. The constitution of the optical body 10 of this embodiment is similar to that of the first embodiment. The diffraction grating 16 and the photodiode array 17 are not shown in FIG 5.

The glass member 11 is placed on the top surface 10a of the optical body 10. While the constitution of the glass member 11 is approximately the same as that of the first embodiment, two positioning holes 15 are provided in positions, one in front of and the other behind the light entry slit 12, as positioned relative to the light entry slit 12. Positioning rods 35 formed in a cylindrical shape and projecting upward from the optical body 10 are secured respectively in the positioning holes 15. In this manner, the positioning rods 35 are placed in position relative to the glass member 11 and the light entry slit 12.

In relation to the optical body 10, the glass member 11 and other components, the connecting flange 20 is attached to the top surface 10a of the optical body 10. The connecting flange 20 is provided with the opening 21 to which the glass member 11 is positioned and inserted, and with the holes 22 for securing the connecting flange 20 by means of screws.

For the above positioning rods 35, the connecting flange 20 is provided with two insertion holes 27, one in front of and the other behind the opening 21, in positions corresponding to the positioning rods 35, so that the positioning rods 35 are inserted into the insertion holes 27. In this manner, the positioning rods 35 project upward from the connecting flange 20 to be positioning elements attached directly and placed in position relative to the glass member 11 including the light entry slit 12.

As described above, when the spectrometer 1A using as the positioning elements the positioning rods 25 provided on the connecting flange 20 as shown in FIG. 1 is applied to the measuring apparatus, optical connection of the object light to the spectrometer is achieved favorably by connecting the spectrometer and other members of the measuring apparatus in a simple manner with high accuracy. The same effect is provided also with the spectrometer 1B shown in FIG 4 or with the spectrometer 1C shown in FIG. 5, with the former using the positioning rods 31 as positioning elements provided in position relative to the light entry slit 12, with the latter using the positioning rods 35 as positioning elements provided in position relative to the glass member 11.

The spectrometer and the measuring apparatus according to this invention are not limited to the above embodiments but may be modified in various ways. For example, as for the constitution of the spectroscopic section used for separating the incident object light, various constitutions other than the above constitution using the optical body 10, the diffraction grating 16, and the photodiode array 17 may be employed. Generally, the spectroscopic section is preferably provided with a dispersive element and a photodetector.

### Industrial Applicability

This invention may be used as the spectrometer capable or favorably achieving optical connection to light to be optically separated and the measuring apparatus using the spectrometer.

## Claims

1. A spectrometer comprising:
a spectroscopic section used for separating incident object light into its spectral components,
a glass member (11) of a rectangular parallélépiped shape, provided in a predetermined position relative to the spectroscopic section and in which a light entry slit (12) for permitting entry of the object light into the interior of the spectroscopic section is formed on a lower surface;
a connecting member used to connect the glass member (11) and the spectroscopic section to another member; and
a positioning element positioned relative to the glass member (11) for positioning the light entry slit (12) relative to the other member, wherein the spectroscopic section includes:
an optical body (10) made of a material that permits passage of the object light;
a concave surface reflection type diffraction grating (16) formed on a lower surface (10b) of the optical body (10) for separating the object light from the light entry slit (12) into its spectral components; and
a photodetection element array (17) formed on an upper surface (10a) of the optical body (10) and having plural photodetection elements, arranged in a direction which is the same as a direction of light dispersion with the diffraction grating (16), for detecting the spectral components of the object light from the diffraction grating (16), and wherein
the glass member (11) is provided on the upper surface (10a) of the optical body (10), and the lower surface of the glass member (11) with the light entry slit (12) is in contact with the optical body (10),
the connecting member is a connecting flange (20) of a plate-like shape provided on the upper surface (10a) of the optical body (10) and having an opening (21) into which the glass member (11) is inserted, the opening (21) having the same rectangular shape as the glass member (11) as seen from above;
the glass member (11) has first and second side surfaces (lla, 11b), the first and second side surfaces (lla, 11b) of the glass member (11) and corresponding side surfaces of the opening (21) serving as positioning surfaces for mutual positioning of the glass member (11) and the connecting flange (20) as the surfaces come into contact with each other, and
the positioning element includes positioning protrusions projecting upward from the connecting flange (20).

2. The spectrometer as claimed in Claim 1, wherein the positioning protrusions are positioning rods (25) provided on the upper surface of the connecting flange (20).

3. The spectrometer as claimed in Claim 1, wherein the positioning protrusions are positioning rods (31) positioned relative to the light entry member (11) , and
the connecting flange (20) is provided with insertion holes(26)in positions corresponding to the positioning rods (31), so that the positioning rods (31) are inserted into the insertion holes (26)

4. A measuring apparatus comprising:
the spectrometer as claimed in any one of Claims 1 to 3 ;
an optical system for guiding the object light to the light entry slit (12) of the spectrometer; and
a holding member connected to the connecting member of the spectrometer for holding the spectrometer and the optical system as positioned.

## Patentansprüche

1. Spektrometer, umfassend:
einen Spektroskopieabschnitt, der zum Trennen einfallenden Objektlichts in seine Spektralkomponenten verwendet wird,
ein Glaselement (11) von rechteckiger, parallelpepipedartiger Gestalt, das in einer vorgegebenen Position bezüglich des spektroskopischen Abschnitts vorgesehen ist und in welchem ein Lichteinfallschlitz (12) zum Ermöglichen des Einfalls von Objektlicht in das Innere des Spektroskopieabschnitts an einer unteren Fläche ausgebildet ist;
ein Verbindungselement, das zum Verbinden des Glaselements (11) und des Spektroskopieabschnitts mit einem weiteren Element verwendet wird; und
ein Positionierungselement, das bezüglich des Glaselements (11) positioniert ist, um den Lichteinfallschlitz (12) bezüglich des anderen Elements zu positionieren, wobei der Spektroskopieabschnitt umfasst:
einen optischen Körper (10), der aus einem Material gefertigt ist, welches das Durchtreten des Objektlichts erlaubt;
ein Beugungsgitter vom konkaven Oberflächenreflexionstyp (16), das an einer unteren Fläche (10b) des optischen Körpers (10) gebildet ist, um das Objektlicht aus dem Lichteintrittsschlitz (12) in seine Spektralkomponenten zu trennen; und
eine Photodetektionselement-Anordnung (17), die an einer oberen Fläche (10a) des optischen Körpers (10) gebildet ist und mehrere Photodetektionselemente umfasst, die zum Erfassen der Spektralkomponenten des Objektlichts von dem Beugungsgitter (16) in einer Richtung angeordnet sind, welche dieselbe ist wie eine Richtung der Lichtstreuung durch das Beugungsgitter (16), und wobei
das Glaselement (11) an der oberen Fläche (10a) des optischen Körpers (10) vorgesehen ist, und die untere Fläche des Glaselements (11) mit dem Lichteinfallschlitz (12) in Berührung mit dem optischen Körper (10) kommt,
wobei das Verbindungselement ein Verbindungsflansch (20) von plattenförmiger Gestalt ist, der an der oberen Fläche (10a) des optischen Körpers (10) vorgesehen ist und eine Öffnung (21) aufweist, in welche das Glaselement (11) eingeführt ist, wobei die Öffnung (21) von oben gesehen dieselbe rechteckige Gestalt aufweist wie das Glaselement (11);
wobei das Glaselement (11) erste und zweite Seitenflächen (11a, 11b) aufweist, wobei die ersten und zweiten Seitenflächen (11a, 11b) des Glaselements (11) und entsprechende Seitenflächen der Öffnung (21) als Positionierungflächen für die Positionierung des Glaselements (11) und des Verbindungsflanschs (20) zueinander dienen, wenn die Flächen miteinander in Berührung kommen, und
wobei das Positionierungselement Positionierungsvorsprünge umfasst, die von dem Verbindungsflansch (20) nach oben ragen.

2. Spektrometer nach Anspruch 1, wobei die Positionierungsvorsprünge an der oberen Fläche des Verbindungsflanschs (20) vorgesehene Positionierungsstifte (25) sind.

3. Spektrometer nach Anspruch 1, wobei die Positionierungsvorsprünge Positionierungsstifte (31) sind, die bezüglich des Lichteinfallelements (11) positioniert sind, und
wobei der Verbindungsflansch (20) in Positionen, die den Positionierungsstiften (31) entsprechen, mit Einführungslöchern (26) versehen ist, so dass die Positionierungsstifte (31) in die Einführungslöcher (26) eingeführt sind.

4. Messvorrichtung, umfassend:
das Spektrometer nach einem der Ansprüche 1 bis 3;
ein optisches System zum Führen des Objektlichts zum Lichteinfallschlitz (12) des Spektrometers; und
ein mit dem Verbindungselement des Spektrometers verbundenes Haltelement zum Halten des Spektrometers und des optischen Systems in ihrer Position.

## Revendications

1. Spectromètre comprenant :
une section spectroscopique utilisée pour séparer une lumière objet incidente en ses composantes spectrales,
un élément en verre (11) en forme de parallélépipède rectangulaire, pourvu dans une position prédéterminée par rapport à la section spectroscopique et où une fente (12) d'entrée de lumière destinée à permettre l'entrée de la lumière objet à l'intérieur de la section spectroscopique est formée sur une surface inférieure ;
un élément de liaison utilisé pour relier l'élément en verre (11) et la section spectroscopique à un autre élément, et
un élément de positionnement positionné par rapport à l'élément en verre (11) pour positionner la fente (12) d'entrée de lumière par rapport à l'autre élément, où la section spectroscopique comporte :
un corps optique (10) réalisé en un matériau qui permet le passage de la lumière objet ;
un réseau de diffraction (16) de type à réflexion de surface concave formé sur une surface inférieure (10b) du corps optique (10) pour séparer la lumière objet de la fente (12) d'entrée de lumière en ses composantes spectrales ; et
un ensemble (17) d'éléments de photodétection formé sur une surface supérieure (10a) du corps optique (10) et ayant une pluralité d'éléments de photodétection, agencés dans une direction qui est la même que la direction de dispersion de la lumière avec le réseau de diffraction (16), pour détecter les composantes spectrales de la lumière objet à partir du réseau de diffraction (16), et où
l'élément en verre (11) est pourvu sur la surface supérieure (10a) du corps optique (10), et la surface inférieure de l'élément en verre (11) avec la fente (12) d'entrée de lumière est mise en contact avec le corps optique (10),
l'élément de liaison est une bride de liaison (20) en forme de plaque pourvue sur la surface supérieure (10a) du corps optique (10) et ayant une ouverture (21) dans laquelle l'élément en verre (11) est inséré, l'ouverture (21) ayant la même forme rectangulaire que l'élément en verre (11) tel que vu depuis le dessus ;
l'élément en verre (11) a des première et deuxième surfaces latérales (11a 11b), les première et deuxième surfaces latérales (11a, 11b) de l'élément en verre (11) et des surfaces latérales correspondantes de l'ouverture (21) faisant office de surfaces de positionnement pour un positionnement mutuel de l'élément en verre (11) et de la bride de liaison (20) lorsque les surfaces se mettent en contact entre elles, et
l'élément de positionnement comporte des saillies de positionnement se projetant vers le haut à partir de la bride de liaison (20).

2. Spectromètre tel que revendiqué dans la revendication 1, dans lequel les protubérances de positionnement sont des tiges de positionnement (25) pourvues sur la surface supérieure de la bride de liaison (20).

3. Spectromètre tel que revendiqué dans la revendication 1, dans lequel les protubérances de positionnement sont des tiges de positionnement (31) positionnées par rapport à l'élément (11) d'entrée de lumière, et
la bride de liaison (20) est dotée de trous d'insertion (26) dans des positions correspondant aux tiges de positionnement (31), de sorte que les tiges de positionnement (31) soient insérées dans les trous d'insertion (26).

4. Appareil de mesure comprenant :
le spectromètre tel que revendiqué dans l'une quelconque des revendications 1 à 3 ;
un système optique pour guider la lumière objet vers la fente (12) d'entrée de lumière du spectromètre ; et
un élément de maintien relié à l'élément de liaison du spectromètre pour maintenir le spectromètre et le système optique tel que positionné.
